# EUROPEAN PATENT APPLICATION

(11) **EP 4 520 169 A1**
(43) Date of publication of application: **12.03.2025**
(21) Application number: 22936069.8
(22) Date of filing: 23.08.2022
(51) Int. Cl.: A01M 7/00, A01M 21/04

(54) **SYSTEM, DEVICE AND METHOD FOR IDENTIFYING PLANTS AND CONTROLLING SPRAYING**

(30) Priority: 08.04.2022 BR 102022006844
(71) Applicant: Eirene Projetos e Consultoria Ltda, 90619-900 Porto Alegre (BR)
(72) Inventor: MARCKMANN, Eduardo, 90640-130 PORTO ALEGRE (BR); BORGES, Gabriel De Morais, 91370-170 PORTO ALEGRE (BR); MACHADO, Diógenes Dos Santos, 91900-000 PORTO ALEGRE (BR); FIEGENBAUM, Artur Stein, 95875-000 Fazenda Vilanova (BR)
(74) Representative: KIPA AB
(86) International application number: PCT/BR2022/050328
(87) International publication number: WO 2023/193072

(57) **Abstract**

The invention refers to a system, device, and method for identifying and analyzing the plants, pests, insects, and other elements of a crop to control the spraying of agrochemicals in real time, monitor and analyze planting conditions, and present data to the user for decision-making.

The system comprises a device (7) on the spray boom of the agricultural vehicle that communicates with server (5) in the cloud that communicates with the user interface platform (8) and with the operator interface (10) in the cabin of the sprayer vehicle. The device (7) captures the images during operation, processes and decides the need for spraying, and controls the solenoid valves (3) of the spray nozzles, stores the images and information acquired in the field in memory, and sends them to the server (5) via the Wi-Fi connection.

## Description

### TECHNOLOGY FIELD OF THE INVENTION

The present invention is related to a system, device, and method for identifying and analyzing plants, pests, insects, and other elements present in a crop with the purpose of controlling the spraying of agrochemicals in real time to optimize the use thereof, as well as monitoring and analyzing planting conditions and presenting data to the user to improve decision-making.

### SUMMARY OF THE INVENTION

This invention basically consists of three parts (a) a device to be installed on the spray boom of an agricultural sprayer vehicle, which is intended to collect data on planting conditions, (b) a cloud system that will receive and send data between the device and the platform, and (c) an online platform wherein the data collected by the device and processed by the cloud will be presented to the user in the form of a map with information from each location on the farm.

The device is installed directly on the spray boom of the agricultural vehicle and basically consists of a processor, two cameras (one RGB and one Infrared), Wi-Fi connection, accelerometer, gyroscope, LEDs for illumination in visible and infrared light, CAN bus, and driver for solenoid valves. The device will have the function of capturing the images while the vehicle is operating, processing, deciding in real time whether spraying is necessary on a certain location and controlling spraying through the solenoid valves installed in each spray nozzle. In addition, the device will be responsible for storing in memory the images and other information acquired in the field and sending them to a cloud server through a Wi-Fi connection. This cloud system, in turn, will carry out more sophisticated processing and analysis using the data received.

The cloud system has the function of performing more sophisticated processing to present new information to the user. In addition, the cloud system uses the images acquired by the device to retrain the algorithms contained in the device and in the cloud itself in order to make the system more intelligent over time. Thus, the cloud system also sends data to the device so that the latter can adjust the coefficients related to the image recognition algorithms.

The user platform, in general, is an online platform that receives the data processed by the cloud and presents it to the user in the form of maps with crop information. Thus, the user can virtually access a certain location of their farm and obtain images of that location and other information such as, for example, presence and type of pests, presence and type of weeds, presence and type of fungi, and biomass index.

The invention, therefore, will have the ability to: (a) perform localized and real-time spraying on the crop, (b) perform more sophisticated asynchronous analyses using a cloud system, (c) carry out improvements through the retraining of cloud algorithms, and (d) present data to the user on an online platform.

Moreover, the invention further comprises a screen installed in the cabin of the sprayer vehicle that communicates with the camera device and monitors the speed and positioning of the sprayer vehicle, displays information and possible problems with the device, controls the ideal spraying parameters, and monitors boom swing to mitigate the effects thereof during spraying.

Thus, the present invention is an loT system *(Internet of Things -* internet of things) equipped with artificial intelligence algorithms and sensors for optimizing agricultural production.

### STATE OF THE ART OF THE INVENTION

Currently, the focus on technological advances of the most diverse automation companies is being directed towards the automation of the agricultural sector. In a few decades, these advances have changed the world's agricultural scenario, and many of these advances are related to sowing and harvesting. However, even with this advance, the availability of automated options in the area of care and treatment of plants and soil for planting is still lacking.

To have a healthier plantation, it is necessary to remove plants that can harm the planting. These plants are commonly known as weeds. To remove weeds, herbicides are used, i.e., a chemical treatment. This chemical treatment, which is usually done by spraying the compound, performs a procedure known as desiccation, whereby this is a practice for eliminating all existing vegetation before sowing the crops or in the middle of the crop, using products that do not desiccate the crop, having an effect only on the weed.

Aiming at this situation, many companies focused on automating plant spraying, with different methods for selecting and applying pesticides, herbicides, and similar products. The most used instrument in large rural properties for the application of agricultural inputs is known as a self-propelled sprayer, which consists of a vehicle with a tank for storing the input, more specifically a spray reservoir, and booms of variable sizes, which can reach more than 50 meters and can be located in the front, center, or rear of the vehicle. The booms in question have spray nozzles to distribute the input in the desired area. Usually, the spacing between these nozzles is 35 cm or 50 cm.

However, the self-propelled sprayers currently available to consumers apply the spray without selecting the plants that actually need the chemical application. As a result, the spraying operation of these known and commercially available equipment is applied to soil or plants that would not need treatment and/or application of a herbicide, wasting the input, generating economic losses and/or impacts on the environment.

To be able to identify which plants should be sprayed or treated, many inventions use multispectral cameras that, in addition to capturing images, capture the electromagnetic waves reflected by the plants, waves that are then used to process the image. In this way, by means of the visualization of the planting by cameras, it is possible to identify or select the plants to be treated. Some inventions use digital cameras accompanied by sensors to capture the electromagnetic waves. Other inventions use sensors that capture the reflection of electromagnetic waves at specific wavelengths in an attempt to separate what is a plant from what is soil or what is straw.

In this context, seeking a solution to this problem, many companies resort to vision systems to identify plants that need treatment. With this, various types of models and methods were introduced to the market. Documents CN104034710, CN103091296, and CN203178188 describe the construction of a platform that, by means of cameras, sensors, filters, and LEDs, identifies the health of a plant that has been placed at its base. In this way, the documents solve the problem of identifying which plants need treatment, but do not apply the treatment. Moreover, the proposed solution does not identify the plants in the field, but on a simulated platform, and does not even enable real-time disease control.

To solve the problem of the previous documents, document CN103636582 provides a method of selecting plants, using sensors that identify them by the light reflected from the plants in a greenhouse. From this document, it becomes unnecessary to move the plant to a platform for analysis, but it still does not solve the problem in an open field, only in a greenhouse, limiting the use of the proposed invention.

To be able to apply the treatment in the open field, document CN106417234 uses sensors installed on a mobile base to identify the plant and apply pesticide. Despite solving the problem of the previous documents, the invention of this document only applies and identifies the plants in a given area, limiting itself to the movement of the base. Furthermore, said invention does not identify the species of plant, it only differentiates the plant from other objects and bodies, so it can still apply spraying on plants that do not need it, which causes waste and does not solve the problem of the state of the art.

Document CN206056578 describes the construction of a drone comprising a multispectral camera for agricultural use. However, the document does not describe for what purpose the drone captures the images. Thus, the document does not solve the problem of automatic and real-time application but provides identification of plants by the use of cameras that capture, by means of filters, different wavelengths so that a central unit can process the images.

To solve the problems of the documents described above, document CN106564599 provides the use of a multispectral camera installed on a drone that captures images of plants located in an area previously flown over by the same drone. The images are sent to a central unit installed on a fixed base that processes the images and determines the flow rate of the input for the spraying applied by a second drone. Despite identifying and applying the pesticide, the invention described in the document in question is expensive and still requires a fixed base to carry out the processing. Moreover, to perform the analysis, the invention needs the drone to calculate the flight area and plan the best route. After this first step, a multispectral camera is manually installed and after processing the images, a second drone is used to apply pesticide. This requires extremely qualified labor, which is usually difficult to find on farms. The present invention brings a device installed in a machine that is already in common use on farms, facilitating the process.

Granted Patent BR102019000530, titled *"Device Equipped with Vision and Identification System Installed in Agricultural Equipment",* describes a device with a multispectral camera, generating only one image. The patent does not provide for the use of artificial intelligence, much less the generation of more than one image to assist and improve the collection of information. In addition, the patent only detects the presence or absence of plants, unlike the present invention which has the ability to identify species and other more advanced parameters used for monitoring the crop and to assist in the manager's decision-making.

US2018262571A patent, titled *"INTEGRATED IOT (INTERNET OF THINGS) SYSTEM SOLUTION FOR SMART AGRICULTURE MANAGEMENT"* describes a system that uses thermal cameras to monitor the plantation. Apart from not allowing the proper amount of biomass, the system of said patent has sensors fixed on the ground, and not the vehicle, making it impossible to control the spraying.

Thus, although the state of the art provides for the use of LEDs, cameras, and image processing to control the application of pesticides, herbicides, and the like, there is still no known solution wherein it is possible to use a device that performs identification and spraying in real time, being able to vary the dose according to the need, either by species or biomass, also in real time, as well as having the ability to synchronize captured images and other information with a cloud server, to retrain the algorithms present in the equipment, in addition to performing post-processing of these synchronized images, bringing other monitoring information that will assist the field manager in decision making.

### OBJECTIVE OF THE INVENTION

The invention envisages a device comprising an image capture module that captures color images (RGB) and infrared images, which are sent to the processing module. The processing module merges the information from the two images and interprets the information by means of the algorithms contained in the processor in real time. The result of this interpretation will determine whether the device will activate or deactivate spraying on the target plant, by means of the solenoid valves attached to the spray boom.

The two cameras used in the invention's capture module allow a very precise analysis of the crop. The RGB camera is capable of capturing frequencies reflected in the crop, soil, and straw with wavelengths between 380nm and 740nm approximately. The infrared camera can capture frequencies reflected in the crop, soil, and straw in the near infrared spectrum with wavelengths between 800nm and 2500nm. From these reflection intensities, mathematical transformations are performed to generate new images in other domains for more precise analyses, such as NDVIr and NDVIb, which correspond to the normalized difference vegetation index, calculated using the relationship between the near-infrared band and the red (NDVIr) and blue (NDVIb) bands and defined by NDVIx = (NIR - RGB)/(NIR + RGB), whereby RGB is calculated both in the red and blue frequencies and NIR in the infrared spectrum. The RECI, a spectral index sensitive to yellow leaf areas, is defined as RECI = (NIR/R)-1. The VARlgreen, vegetation index calculated through the ratio between red, green, and blue and defined by VARIgreen = (G - R)/(G+R-B). The EXG, an index that returns the excess of green in the RGB image, is calculated by EXG = 2*G-B-R. The EXR and EXB, indices that return the excess of red in the RGB image, with EXR = (1.4*R-G)/(G+R+B) and EXB being the excess of blue defined by EXB = (1.4*B-G)/(G+R+B). All these transformations result in new grayscale images, with each pixel being the result of the equation, and each image highlights different aspects of the crop to facilitate automatic decision-making. From these images, the number of pixels in different gray bands is calculated, as well as the mean, standard deviation, variance, relationship between each gray band, and the shape of certain shades of gray. Then, statistical and morphological information is generated in different shades of gray from each mathematical transformation that will serve as input to machine learning algorithms for the correct decision in real time during spraying, in addition to bringing post-processing data to assist in field management.

The use of two cameras synchronized by a processor has the advantage of segmenting two separate image sources tuned into elements suitable for the field. The use of two cameras with these configurations renders the system more economically viable because it eliminates the need for market multispectral cameras, which are usually costly and would make the system economically unfeasible. Therefore, it is possible to use two common and low-cost cameras providing one is RGB and the other is Infrared. In addition, if one camera is damaged or obstructed by dirt, it is still possible to carry out the basic operations of selective spraying using the other camera, considering that both cameras can measure the reflection caused by chlorophyll and therefore would still be able to differentiate between plant, soil, or straw. The use of two cameras makes the system more precise in identifying the spray target. The RGB camera, in turn, is more suitable for evaluating the color and shape of plant leaves. The infrared camera refines the detection of plant thresholds, as they reflect a large amount of infrared light. In addition, infrared helps in detecting the stress that the plant has been experiencing from pest and disease attacks and can also be compared with symptoms captured in the RGB image, ensuring greater accuracy in the diagnosis. Therefore, all vegetative indices carried out through mathematical transformations highlight or attenuate certain aspects of the plant to facilitate identification. The algorithms that detect the characteristics and properties of the plant are previously trained with an image bank annotated by experts in the field. In this way, each image in the database will have an identification in relation to species, diseases, and pests. The coefficients of the algorithms are updated according to the training that is carried out, having as input a region of pixels of each vegetative index and as output the annotation made by the specialist. Thus, there is a system capable of performing interpretations of each image acquired for selective spraying in real time and for improving decision making.

The system comprises a positioning module capable of identifying the position and speed of the vehicle where the system will operate, to enable the correct mapping of the plantation in relation to the plants. Speed monitoring makes it possible to apply the agricultural input to the target plant independent of the speed at which the sprayer vehicle is moving.

To control the lighting and intensity of reflection of the plants, the device comprises a lighting module, preferably composed of visible light and infrared LEDs, making it possible to use the system in any type of lighting regardless of whether the period is night, day, or if it is cloudy. In addition, the active lighting built in this manner makes detection more reliable when there is the presence of straw in the crop and other elements that can cause false triggers.

To mitigate the effects of the spray boom swing, the device comprises a spray boom sensing module that includes accelerometer and gyroscope sensors to identify the displacement of the spray boom, allowing the algorithm to compensate for this effect and still reach the target plant, even with sudden variations in boom height. Each device installed on the spray boom has a system consisting of an accelerometer and a gyroscope. Being two microelectromechanical type sensors, the accelerometer is capable of measuring acceleration in the X, Y, or Z axis, while the gyroscope measures the rate of rotation around a certain axis. Considering that a spray boom during the use thereof in the field can vary its height due to irregularities in the field, terrain, or curves, generating an upward or downward arc movement, especially at the tips, the combination of the accelerometer and the gyroscope provides the processor with information about the current movement of the boom. The signals generated by the sensors are processed to record their magnitudes, directions, and derivatives, which provides the necessary information for the sensor to delay or advance a certain spraying to achieve the desired target hit.

The system comprises an interface module wherein all the information captured by the hardware is displayed and also where the operator can parameterize the hardware.

Finally, the device comprises a communication module, which interconnects the processing module with the valves present in the vehicle's spray boom to enable the opening and closing of the spraying in real time, as well as enabling the control of the application dose proportionate to the amount of biomass detected or by species detected. This is possible due to the ability of the hardware to generate a PWM (Pulse Width Modulation) control, thus, when using PWM valves, the agrochemical dosage is controlled based on the camera reading, providing another cost-saving point for the producer.

The device's capture module comprises two cameras, whereby one is RGB and the other Infrared for image generation, and a processing module, whose internal processor receives the images from the cameras and applies them to the algorithms. Further, the device's lighting module comprises LEDs, lenses, and sensors, controlled by the processor, to assist in capturing images.

The processing module located on the device communicates with the cloud by establishing a Wi-Fi connection, which allows the sending and receiving of data related to the plantation. The cloud comprises an artificial intelligence module for analyzing the images and other data received, generating a map for the producer with valuable information for the maintenance of their agricultural production. In addition, the cloud has the ability to retrain the algorithms of the equipment, and the algorithms contained in the cloud itself from the captured images so that the entire system increases its intelligence as time goes by. This is possible by using the images for classification manually done by an expert in the field, who will indicate the information contained in the image. The new images and the annotations thereof are used for a new training of the algorithm, generating new coefficients that will be updated on the hardware and on the server. Considering that an algorithm has inputs f1, f2, f3...fx and coefficients c1, c2, c3...cx, we have a result y1 = c1*f1 + c2*f2 + c3*f3 + ... + cx*fx that will subsequently pass through a threshold and finally provide the appropriate answer. With the training using new annotated images, the algorithm will be updated with new coefficients d1, d2, d3...dx, resulting in y2 = d1*f1+d2*f2+d3*f3+...+dx*fx, whereby y2 will have a more accurate result due to its greater number of training images.

In this manner the invention makes it possible to:
- Control the opening and closing of PWM valves, spraying the agrochemical on the target plant according to the detection of the device in real time;
- Compensate for vehicle speed variation by maintaining the application dose due to the use of a PWM valve next to the system;
- Compensate for variation in boom height, caused by mechanical swaying, maintaining the hit rate in the target plant;
- Make a variable dose, according to the objective (apply more in higher biomass, or more on a certain species);
- Mapping of plantation vegetation indices;
- Identify the presence of a plant, for localized application;
- Identify the plant species, to treat with the correct pesticide;
- Analyze pests in real time;
- Analysis of signs and symptoms of diseases in real time;
- Automatic counting of plant density;

The analyses will be delivered in the form of maps and reports referring to the place where the plants, pests, and/or diseases were detected and the points that were applied to control them, as well as the representation of the plant density with precision throughout the plot.

### DESCRIPTION OF THE FIGURES

**Figure 1** represents a section of the spray boom;
**Figure 2** details a portion of the spray boom; **Figure 3** represents the system diagram;
**Figure 4** represents the block diagram of the device that is part of the system;
**Figure 5** represents a perspective view of the device;
**Figure 6** represents an exploded perspective view of the device;
**Figure 7** represents the method's flowchart.

### DETAILED DESCRIPTION OF THE FIGURES

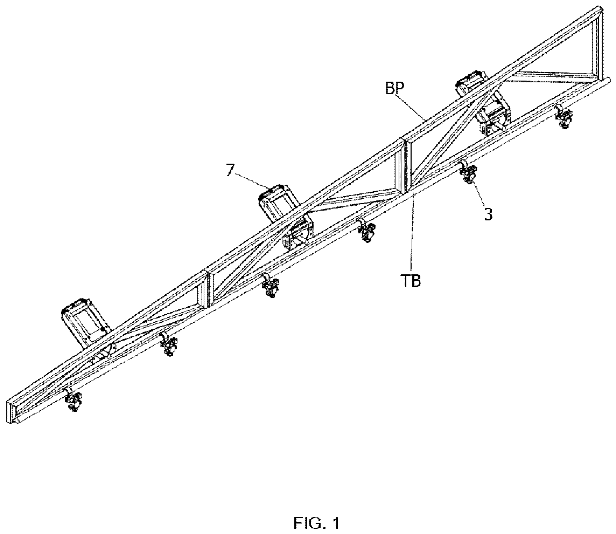

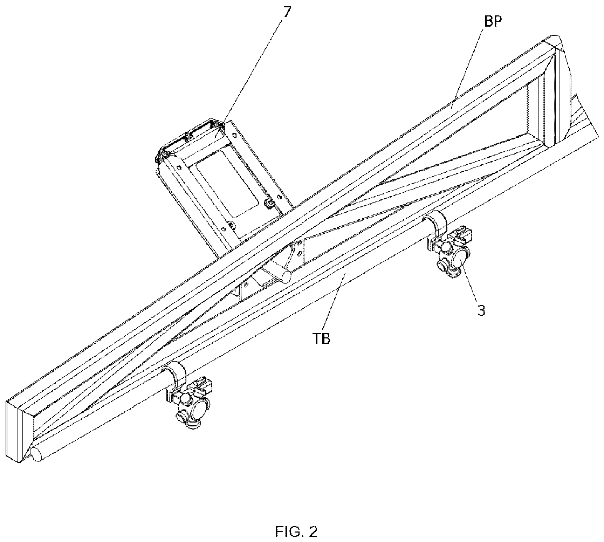

Figures 1 and 2 exemplify a spray boom (SB) mounted on the agricultural vehicle (not pictured), which is equipped with a piping (P) that feeds the spray valves (3), which in turn are controlled by the devices (7). Preferably, each device (7) can control two valves (3).

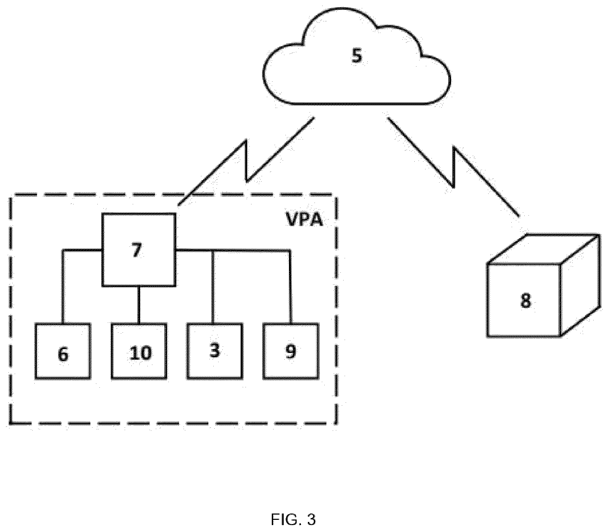

Figure 3 schematically illustrates the system comprising a device (7) installed on the spray boom of the agricultural vehicle (VPA) that communicates by means of a Wi-Fi connection with a server (5) in a cloud, which, in turn, communicates with the user interface module platform (8) and with the operator interface (10) installed in the cabin of the sprayer vehicle (SV) that communicates with the device (7). The device (7) is responsible for capturing images while the vehicle is operating, processing the same, deciding in real time whether spraying is necessary in a certain location, and controlling spraying through the solenoid valves (3) installed in each spray nozzle; as well as storing the images and other information acquired in the field in memory and sending same to the cloud server (5) via the Wi-Fi connection. The cloud server (5), in turn, will perform more sophisticated processing and analysis using the data received. The user interface module platform (8) is an online platform that receives the data processed by the server (5) in the cloud and presents it to the user in the form of maps with crop information. The device (7) communicates with the accelerometer and gyroscope of the sensing module (9) and with the positioning module (6) integrated by the GPS that provides the speed and position of the vehicle.

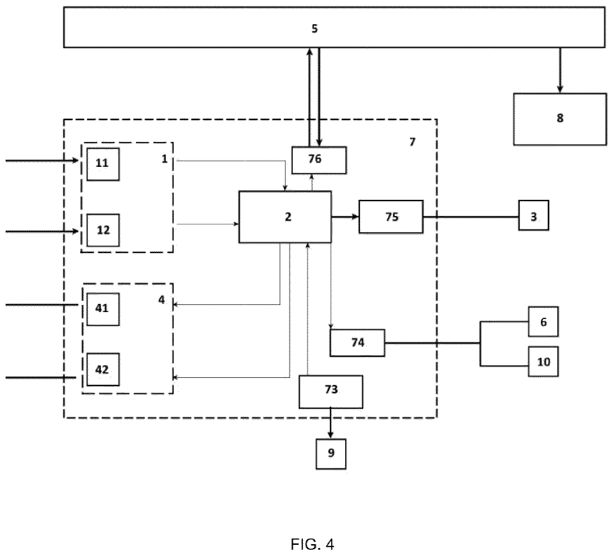

As shown in figure 4, the invention has a device (7) that comprises a capture module (1) that sends information to the processing module (2). The capture module (1) and processing module (2) of the device (7) are installed on the spray boom of the sprayer vehicle corresponding to each valve (3), enabling independent control of each valve (3). To assist the capture module (1), the device (7) comprises a lighting module (4), which controls the exposure of the plant to lighting, reducing the brightness variation in the capture module (1).

Each processing module (2) is in communication with the server (5) in the cloud, by means of the Wi-Fi connection (76), enabling remote access to the database and artificial intelligence, which will adapt the algorithm of the processing module (2) depending on the images generated by the capture module (1).

The capture module (1) comprises an RGB camera (11) and an infrared camera (12), to enable the reading of plant colors and the reading of the infrared spectrum, such as the amount of chlorophyll in the plants.

The system further includes the interface with the operator (10), where all the information captured by the system is displayed, such as:
- Which valves are open and closed
- Average and instant agrochemical savings
- Possible sensor failures
- Sensor connection status on the communication bus
- Obstructed camera alert.

In addition, by means of the interface with the operator (10) the system may receive the following data:
- Spraying in total area, without selecting target;
- Select and spray in real time all detected plants;
- Select and spray in real time only the desired plant species/family;
- Select and spray in real time only plants with symptoms of attack or presence of insects.
- Select and spray in real time only plants with symptoms of attack or presence of diseases;
- Whether or not you want to count the density of plants;
- Inform what information you would like to sample to perform post-processing.

The system further comprises a positioning module (6) formed by a GPS installed in the cabin of the agricultural vehicle that communicates directly with the sprayer vehicle, which enables the monitoring of the speed and position of the vehicle, to subsequently map the plantation.

The speed of the sprayer is monitored to accurately apply the spray on the plant. For example, a vehicle at 6 km/h will require a certain delay to open the valve, while a vehicle at 30 km/h will not require this long delay.

The system employs a device (7), wherein the capture module (1), the processing module (2), and the lighting module (4) are installed.

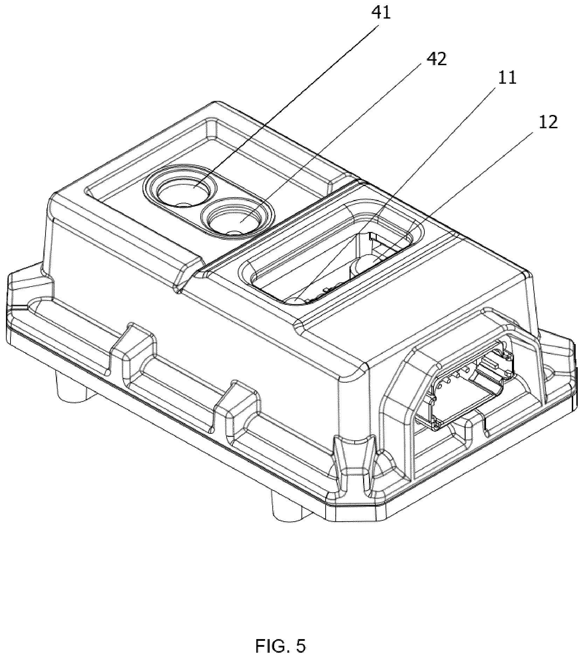

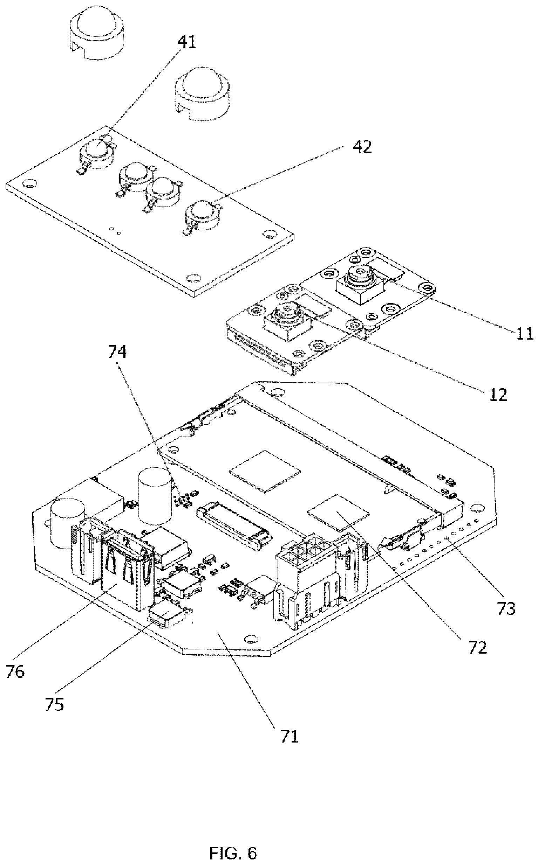

Aided by figures 5 and 6, the device (7) is installed on the spray boom of the sprayer vehicle and communicates directly with the valves (3). The device comprises a PCB board (71) with two cameras, one RGB (11) and the other Infrared (12), a processor (72), and a lighting set with LEDs with visible light (41) and infrared (42). The device (7) further comprises an input (73) for gyroscope and accelerometer type sensors to compensate for the effects of spray boom swaying, a CAN communication driver (74), and an actuation driver (75) for solenoid valves (3). The device (7) has the function of capturing images while the vehicle is operating, processing same, deciding in real time whether spraying is necessary in a certain location, and controlling the spraying through the solenoid valves (3) installed in each spray nozzle. In addition, the device (7) has memory to store the images and other information acquired in the field to send to the cloud server (5) by means of a Wi-Fi connection. And for this purpose, it is equipped with a port for Wi-Fi adapter (76).

In summary, the device (7) performs the acquisition of images through the RGB (11) and Infrared (12) cameras and sends the images to the processor (72) wherein the algorithms of mathematical transformations and pattern recognition will be applied. The processor (72) controls the activation of the visible light (41) and infrared (42) LEDs, manages the images and the information extracted from the images, and sends them to the cloud server (5) via the Wi-Fi connector (76). The server (5), in turn, will store the images for algorithm retraining and will also assemble the map to be made available to the user. The processor (2) is also responsible for controlling the actuation driver (75) of the solenoid valves (3) based on the image readings. The information extracted from the accelerometer and gyroscope (9) is sent to the processor to compensate for the valve activation time (3). Through the CAN bus (74), the device (7) communicates with the operator interface (10) to interpret the user's commands and send the operating status of the device (7).

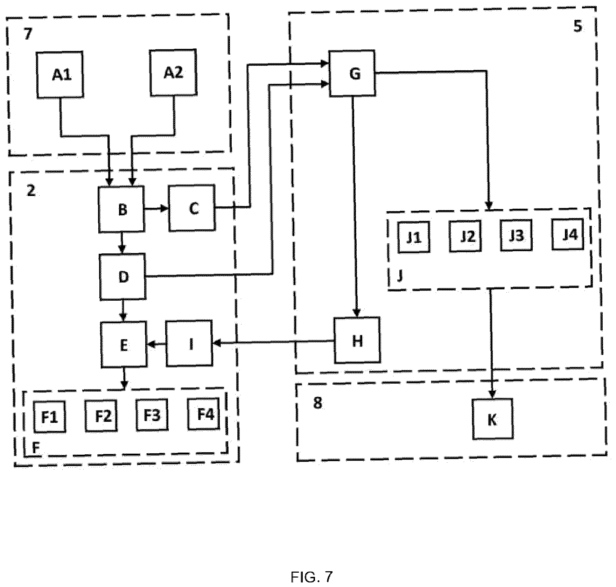

Figure 7 shows the flowchart of the system's operation, which comprises the following steps:
A. Generation of images by means of the device's RGB (A1) and Infrared (A2) cameras (7);
B. Real-time image acquisition on the processor (2);
C. Images are stored without processor memory (2);
D. Extraction of information from the images by the processor's algorithms (2); E. Algorithm performs image analysis and treatment and data extraction in the processor (2);
F. From the extracted information, the processor (2) is able to perform the following analyses for selective spraying in real time: Present/absent plant (F1), presence and type of pest (F2), presence and type of disease (F3), and classification of plant species (F4);
G. The server-side flow (5) follows through the images and information received by the device (7);
H. New training of the algorithms on the server (5);
I. Plant stand analysis (J1), biomass analysis (J2), and map generation (J3) on the server (5);
J. The data from the server (5) is sent to the user interface module platform (8) where the maps with the images and the result of the evaluation of each image (K) will be presented.

## Claims

1. **SYSTEM FOR PLANT IDENTIFICATION AND SPRAY CONTROL characterized by** comprising a device (7) installed on the agricultural vehicle spray boom (SVB) that activates the valves (3) of the spray nozzles, whereby the device (7) communicates by means of a Wi-Fi connection with a cloud server (5) which, in turn, communicates with the platform (8) of the user interface module, and the device (7) further communicates with an operator interface (10) installed in the spray vehicle cab (SVC), with a positioning module (6) of the sprayer vehicle and with a sensing module (9) of the spray boom.

2. **SYSTEM,** according to claim 1, **characterized by** the device (7) capturing the images while the vehicle is operating, processing same, deciding in real time whether spraying is necessary at a certain location and controlling the spraying by means of the solenoid valves installed in each spray nozzle, storing in memory the images and other information acquired in the field and sending them to the cloud server (5) by means of a Wi-Fi connection (76).

3. **SYSTEM,** according to claim 2, **characterized by** the device (7) comprising an image capture module (1), a lighting module (4), and a processing module (2) that communicates with the cloud server (5), wherein the system's artificial intelligence is installed.

4. **SYSTEM,** according to claim 1, **characterized by** the cloud server (5) processing and analyzing the images and data received from the device (5) and sending them to the user interface module (8).

5. **SYSTEM,** according to claim 4, **characterized by** the user interface module platform (8) being an online platform that receives the data processed by the cloud server (5) and presents it to the user in the form of maps with crop information.

6. **SYSTEM,** according to claim 1, **characterized by** the module lighting (4) comprising LEDs with visible light (41) and infrared (42).

7. **SYSTEM,** according to claim 1, **characterized by** the vision capture module (1) comprising an RGB camera (11) and an infrared camera (12).

8. **DEVICE FOR PLANT IDENTIFICATION AND SPRAY CONTROL,** installed in the system as defined in claims 1 to 7, **characterized by** comprising a PCB board (71) wherein there are installed two cameras (11 and 12) for capturing images of the crop, a processor (72), two LEDs (41 and 42) for crop lighting, an input for gyroscope and accelerometer sensors (73), a CAN communication driver (74) with a communication module for vehicle sensing (6) and for the vehicle's operator interface (10), a valve actuation driver (75) (3), and an adapter input (76) for the Wi-Fi connection for communication with the cloud server (5).

9. **DEVICE,** according to claim 8, **characterized by** the two cameras being one RGB (11) and one infrared (12).

10. **DEVICE,** according to claim 8, **characterized by** the two LEDs being visible light (41) and infrared (42).

11. **METHOD FOR PLANT IDENTIFICATION AND SPRAY CONTROL,** employed by the system as defined in claims 1 to 7, **characterized by** comprising the following steps:
A. Generation of images by means of the device's RGB (A1) and Infrared (A2) cameras (7);
B. Real-time image acquisition on the processor (2);
C. Images are stored without processor memory (2);
D. Extraction of information from the images by the processor's algorithms (2);
E. Algorithm performs the analysis and treatment of images and data extraction in the processor (2);
F. From the extracted information, the processor (2) is able to perform the following analyses for selective spraying in real time: Plant present/absent (F1), presence and type of pest (F2), presence and type of disease (F3), and classification of plant species (F4);
G. The server-side flow (5) follows through the images and information received by the device (7);
H. New training of the algorithms on the server (5);
I Plant stand analysis (J1), biomass analysis (J2), and map generation (J3) on the server (5);
J. The data from the server (5) is sent to the user interface module platform (8) where the maps with the images and the result of the evaluation of each image (K) will be presented.

12. **METHOD,** according to claim 11, **characterized by** the analysis and treatment of the images of step E being based on the intensity of reflection and absorption of electromagnetic waves referring to red, green, blue, and infrared.

13. **METHOD,** according to claim 12, **characterized by** the fact that, from the analysis and interpretation of the images, the processing module (2) will count the amount of white pixels to determine the amount of biomass.

14. **METHOD,** according to claim 12, **characterized by** the images stored in the database being evaluated by a technician/expert who will generate an annotation for each image that will retrain the artificial intelligence algorithm.

## Amended claims

### Amended claims under Art. 19.1 PCT

1. **SYSTEM FOR PLANT IDENTIFICATION AND SPRAY CONTROL** with a Wi-Fi connection to a cloud server (5) **characterized by** comprising a device (7) installed on the spray boom of the agricultural vehicle (VSB) that actuates the valves (3) of the spray nozzles, whereby the device (7) communicates by means of a Wi-Fi connection with a cloud server (5) which, in turn, communicates with the platform (8) of the user interface module, and the device (7) further communicates with an operator interface (10) installed in the sprayer vehicle cabin (VPA), with a positioning module (6) of the sprayer vehicle and with a sensing module (9) of the spray boom; said device (7) comprises an image capture module (1) with an RGB camera (11) and an infrared camera (12), a lighting module (4) and a processing module (2) that communicates with the cloud server (5), wherein the system's artificial intelligence is installed; where the device (7) communicates with the accelerometer and gyroscope of the sensing module (9) and with the positioning module (6) integrated by the GPS that provides the speed and position of the vehicle; and the user interface module platform (8) is an online platform that receives the data processed by the cloud server (5) and presents it to the user in the form of maps with crop information.

2. **SYSTEM,** according to claim 1, **characterized by** the device (7) capturing the images while the vehicle is operating, processing them, deciding in real time whether spraying is necessary at a given location and controlling the spraying through the solenoid valves (3) installed in each spray nozzle, storing in memory the images and other information acquired in the field and sending them to the cloud server (5) through a Wi-Fi connection (76).

3. **SYSTEM,** according to claim 1, **characterized by** the cloud server (5) processing and analyzing the images and data received from the device (5) and sending them to the user interface module (8).

4. **SYSTEM,** according to claim 1, **characterized by** the lighting module (4) comprising LEDs with visible light (41) and infrared (42).

5. **DEVICE FOR PLANT IDENTIFICATION AND SPRAY CONTROL,** installed in the system as defined in claims 1 to 4, **characterized by** comprising a PCB board (71) where two cameras (11 and 12) are mounted for capturing images of the crop, a processor (72), two LEDs (41 and 42) for field lighting, an input for gyroscope and accelerometer sensors (73), a CAN communication driver (74) with a communication module for vehicle sensing (6) and for the vehicle's operator interface (10), a valve actuation driver (75) for the valves (3), and an adapter input (76) for the Wi-Fi connection for communication with the cloud server (5).

6. **DEVICE,** according to claim 5, **characterized by** the two LEDs being visible light (41) and infrared (42).

7. **METHOD FOR PLANT IDENTIFICATION AND SPRAY CONTROL,** employed by the system as defined in claims 1 to 4, **characterized by** comprising the following steps:
A. Generation of images by means of the device's RGB (A1) and Infrared (A2) cameras (7);
B. Real-time image acquisition on the processor (2);
C. Images are stored without processor memory (2);
D. Extraction of information from the images by the processor's algorithms (2);
E. Algorithm performs image analysis and treatment and data extraction in the processor (2);
F. From the extracted information, the processor (2) is able to perform the following analyses for selective spraying in real time: Plant present/absent (F1), presence and type of pest (F2), presence and type of disease (F3), and classification of plant species (F4);
G. The server-side flow (5) follows through the images and information received by the device (7);
H. New training of the algorithms on the server (5);
I. Plant stand analysis (J1), biomass analysis (J2), and map generation (J3) on the server (5);
J. The data from the server (5) is sent to the user interface module platform (8) where the maps with the images and the result of the evaluation of each image (K) will be presented.

8. **METHOD,** according to claim 7, **characterized by** the analysis and treatment of the images of step E being based on the intensity of reflection and absorption of electromagnetic waves referring to red, green, blue, and infrared.

9. **METHOD,** according to claim 7, **characterized by** the fact that, from the analysis and interpretation of the images, the processing module (2) will count the amount of white pixels to determine the amount of biomass.

10. **METHOD,** according to claim 7, **characterized by** the images stored in the database being evaluated by a technician/expert who will generate an annotation for each image that will retrain the artificial intelligence algorithm.

Statement under Art. 19.1 PCT
According to article 19.1, a new set of claims is presented, which better defines the scope of the present invention. Claim 1 was amended, moving to the preamble the matter from the characterizing part that is already known in the state of the art. The matter from the original claims 3, 5 and 7 was moved to the characterizing part of claim 1. And a part previously described in the specification was added to claim 1. Such modifications presented do not add new material to the object originally claimed.
